# EUROPÄISCHE PATENTSCHRIFT

(11) **EP 2 209 939 B1**
(45) Veröffentlichungstag und Bekanntmachung des Hinweises auf die Patenterteilung: **25.05.2016**
(21) Anmeldenummer: 08846025.8
(22) Anmeldetag: 15.10.2008
(51) Int. Cl.: D06F 58/28

(54) **VERFAHREN ZUM BESTIMMEN EINES ABSCHALTZEITPUNKTS EINES PFLEGEPROZESSES**
METHOD FOR DETERMINING THE SWITCH-OFF MOMENT OF A CARE PROCESS
PROCÉDÉ POUR DÉTERMINER LE MOMENT D'ARRÊT D'UN PROCESSUS D'ENTRETIEN

(30) Priorität: 31.10.2007 DE 102007052078
(43) Veröffentlichungstag der Anmeldung: 28.07.2010
(73) Patentinhaber: BSH Hausgeräte GmbH, 81739 München (DE)
(72) Erfinder: NEHRING, Ulrich, 10715 Berlin (DE)
(86) Internationale Anmeldenummer: PCT/EP2008/063860
(87) Internationale Veröffentlichungsnummer: WO 2009/056443

(56) Entgegenhaltungen:
- EP-A- 0 942 094
- EP-A- 1 279 760
- DE-A1- 4 432 055

## Beschreibung

Die vorliegende Erfindung betrifft ein Verfahren zum Bestimmen eines Abschaltzeitpunkts eines Pflegeprozesses, durch welchen in ein Hausgerät eingebrachte Wäschestücke gepflegt werden.

Vorliegend richtet sich das Interesse auf die Bestimmung eines Abschaltzeitpunkts eines Pflegeprozesses, insbesondere bei Erreichen einer vorgegebenen Endfeuchte der Wäschestücke. Einer von der Anmelderin stammenden Methode zufolge wird die Bestimmung der Restfeuchte der Wäschestücke mittels einer Messung eines elektrischen Widerstands der Wäschestücke durchgeführt. Hierzu wird verwiesen auf die Dokumente EP 0 942 094 B1, WO 2004/059072 A1, DE 199 39 274 A1 und DE 44 42 250 C2, welche vorliegender Offenbarung jeweils in vollem Umfange zuzurechnen sind. Allerdings führte der Übergang von Mitnehmerelektroden mit einer großen Kontaktfläche auf Lagerschildelektroden mit einer geringeren Kontaktfläche zu einer Verschlechterung des gemessenen Signals und damit zu einer relativ hohen Streuung der ermittelten Endfeuchte.

Das Dokument DE 44 32 055 A1 betrifft ein Verfahren zur Ermittlung der Dauer eines Trocknungsvorgangs in einem programmgesteuerten
Wäschetrockner mit einer elektronischen Programmsteuerung.

Es ist die Aufgabe der vorliegenden Erfindung, ein Verfahren zum Bestimmen eines Abschaltzeitpunkts eines Pflegeprozesses vorzuschlagen, bei welchem der Abschaltzeitpunkt des Pflegeprozesses besonders exakt bestimmt werden kann.

Diese Aufgabe wird erfindungsgemäß jeweils durch ein Verfahren mit den Merkmalen eines der unabhängigen Patentansprüche gelöst. Bevorzugte Weiterbildungen der erfindungsgemäßen verfahren sind Gegenstände entsprechender abhängiger Patentansprüche oder nachfolgend erläutert.

Ein Verfahren gemäß einem ersten Aspekt der Erfindung ist zum Bestimmen eines Abschaltzeitpunkts eines Pflegeprozesses, durch welchen in ein Hausgerät eingebrachte Wäschestücke gepflegt werden, ausgelegt. Bei dem Verfahren wird ein Verlauf einer Gesamtheizenergie für die Pflege der Wäschestücke vordefiniert und eine durch einen elektrischen Strom vorgegebener Stärke über einem elektrischen Widerstand der Wäschestücke abfallende elektrische Spannung während des Pflegeprozesses ermittelt, wobei abhängig von dem Verlauf der Gesamtheizenergie während des Pflegeprozesses, einer Summe der vordefinierten Gesamtheizenergie und dem aktuellen Wert der elektrischen Spannung der Wäschestücke der Abschaltzeitpunkt bestimmt wird.

Ein Grundgedanke der vorliegenden Erfindung besteht darin, die in einer Prozessoreinheit des Hausgeräts vorliegenden Informationen zu der für den spezifischen Pflegeprozess benötigten Gesamtheizenergie sowie die über den Wäschestücken bei Durchleiten eines elektrischen Stroms von vorgegebener Stärke abfallende momentane Wäschespannung zur Entscheidung über die Abschaltung des Pflegeprozesses heranzuziehen. Insbesondere wird der Pflegeprozess bei Erreichen einer vorgegebenen Endfeuchte beendet. In vorteilhafter Weise wird durch die Auswertung der an den Wäschestücken abfallenden Spannung sowie der Summe der benötigten Gesamtheizenergie erreicht, dass eine definierte Beladung des Hausgeräts mit zu pflegenden Wäschestücken erkannt wird und die Wäschestücke zielgerichtet getrocknet werden können.

Vorzugsweise wird bei dem Verfahren die für den gesamten Pflegeprozess bis zu einem gegebenen Messzeitpunkt aufgewendete Gesamtheizenergie durch ein Aufintegrieren einer Heizleistung über die Zeit, während der der Pflegeprozess angedauert hat, bestimmt. Liegen in der Mikroprozessoreinheit des Hausgeräts Informationen über den Verlauf der Heizleistung vor, so ist die Gesamtheizenergie, die für eine vordefinierte Menge an Wäschestücken in Kombination mit der Anfangsfeuchte benötigt wird, gegeben bzw. ermittelbar. Dadurch werden die Information über den Verlauf der Heizleistung während des Trocknungsprozesses und das Signal der Wäschespannung zur Entscheidung über die Abschaltung des Pflegeprozesses herangezogen.

In einer besonders vorteilhaften Ausgestaltung des Verfahrens werden ein Intervall der Gesamtheizenergie zwischen einem niedereren ersten und einem höheren zweiten Gesamtheizenergiewert und ein Intervall der Spannung der Wäschestücke zwischen einem niedereren ersten und einem höheren zweiten Spannungswert vorgegeben, wobei dann beim Erreichen des zweiten Gesamtheizenergiewerts der Abschaltzeitpunkt bestimmt wird, wenn ein momentaner Wert der Spannung während des Pflegeprozesses innerhalb des Intervalls der Spannung und ein momentaner Wert der Gesamtheizenergie innerhalb des Intervalls der Gesamtheizenergie liegt. Mit anderen Worten wird somit ein Spannungs-Energie-Cluster definiert, der einerseits durch das Intervall der Gesamtheizenergie zwischen dem ersten und dem zweiten Gesamtheizenergiewert und andererseits durch das Intervall der Spannung über den Wäschestücken zwischen dem ersten und dem zweiten Spannungswert begrenzt wird. Durchläuft die an den Wäschestücken abfallende Spannung den Spannungs-Energie-Cluster, so wird der Pflegeprozess genau zu dem Zeitpunkt beendet, zu welchem der zweite Gesamtheizenergiewert erreicht wird. Dadurch wird gewährleistet, dass der Pflegeprozess jedes Mal erst dann beendet wird, wenn der minimale, also der erste, Spannungswert überschritten ist.

Bei dem Verfahren wird bevorzugt der Abschaltzeitpunkt auf den aktuellen Zeitpunkt bestimmt, zu dem der Spannungswert vor dem Erreichen des ersten Gesamtheizenergiewerts über den zweiten Spannungswert ansteigt. Somit wird der Pflegeprozess sofort beendet im Falle, dass der vor dem Erreichen des ersten Gesamtheizenergiewerts ermittelte Spannungswert der an den Wäschestücken abfallenden Spannung bereits den zweiten, höheren Spannungswert erreicht hat. Dadurch wird erreicht, dass beispielsweise bei kleiner Beladung des Hausgeräts beim Erreichen der vorgegebenen Endfeuchte der Pflegeprozess nicht unnötig fortgefahren wird. In vorteilhafter Weise kann somit elektrische Energie gespart werden.

Bei dem Verfahren wird in bevorzugter Weise der Abschaltzeitpunkt auf den Zeitpunkt bestimmt, zu dem der Spannungswert auf einen Schwellwert, insbesondere einen Wert gleich oder größer dem zweiten Spannungswert, steigt, wenn der Wert der Spannung nach dem Erreichen des zweiten Gesamtheizenergiewerts unter dem ersten Spannungswert liegt. Insbesondere wird der Pflegeprozess dann beendet, wenn die an den Wäschestücken abfallende Spannung den zweiten, höheren Spannungswert erreicht hat im Falle, dass der nach dem Erreichen des zweiten Gesamtheizenergiewerts ermittelte Wert der an den Wäschestücken abfallenden Spannung kleiner ist als der erste Spannungswert. In vorteilhafter Weise wird somit gewährleistet, dass die vorgegebene Endfeuchte der Wäschestücke jederzeit erreicht wird, selbst wenn die für den Pflegeprozess benötigte Gesamtheizenergie, insbesondere der zweite Gesamtheizenergiewert, bereits überschritten wird.

Der erste Spannungswert wird bevorzugt durch eine Multiplikation des zweiten Spannungswerts mit einem Faktor kleiner als 1 vorgegeben, wobei der Faktor vorzugsweise in einer Entwicklungsphase des Hausgeräts abhängig vom Trocknungsprogramm definiert wird. Insbesondere in der Entwicklungsphase kann die einer vorgegebenen Endfeuchte der Wäschestücke entsprechende Wäschespannung exakt ermittelt werden, und zwar in Abhängigkeit von dem Trocknungsprogramm. Für die Bestimmung des Faktors, und somit des Spannungsintervalls, werden insbesondere Parameter herangezogen, wie Beladung, Umgebungstemperatur, Anfangsfeuchte der Wäschestücke und dergleichen.

Gemäß einem weiteren Aspekt bezieht sich die vorliegende Erfindung auf ein Verfahren zum Bestimmen eines Abschaltzeitpunkts eines Pflegeprozesses, durch welchen in ein Hausgerät eingebrachte Wäschestücke gepflegt werden. Bei diesem erfindungsgemäßen Verfahren werden eine Prozessdauer des gewählten Pflegeprozesses für die Pflege der Wäschestücke vordefiniert und eine an einem elektrischen Widerstand der Wäschestücke abfallende elektrische Spannung während des Pflegeprozesses ermittelt, wobei abhängig von der fortgeschrittenen Prozessdauer während des Pflegeprozesses, der vordefinierten Prozessdauer des gewählten Pflegeprozesses und dem aktuellen Wert der elektrischen Spannung der Wäschestücke der Abschaltzeitpunkt bestimmt wird. Somit wird anstelle der Gesamtheizenergie die Prozessdauer, die ebenfalls in der Mikroprozessoreinheit des Hausgeräts vorliegt, zur Bestimmung des Abschaltzeitpunkts des Pflegeprozesses herangezogen.

Insbesondere können beide Größen, nämlich die Gesamtheizenergie und die Prozessdauer, als gleichberechtigt betrachtet werden. Durch das erfindungsgemäße Verfahren wird in vorteilhafter Weise erreicht, dass sowohl die an den Wäschestücken abfallende momentane Spannung als auch die benötigte Prozessdauer zum Bestimmen des Abschaltzeitpunkts des Pflegeprozesses in Betracht gezogen werden. Insbesondere wird der Pflegeprozess bei Erreichen einer vorgegebenen Endfeuchte der Wäschestücke beendet.

Bei dem Verfahren werden bevorzugt ein Prozessdauerintervall zwischen einem ersten und einem höheren zweiten Zeitpunkt und ein Intervall der Spannung der Wäschestücke zwischen einem ersten und einem höheren zweiten Spannungswert vorgegeben, wobei dann beim Erreichen des zweiten Zeitpunkts der Abschaltzeitpunkt bestimmt wird, wenn ein momentaner Wert der Spannung während des Pflegeprozesses innerhalb des Intervalls der Spannung und ein momentaner Zeitpunkt der Prozessdauer innerhalb des Prozessdauerintervalls liegt. Somit wird ein Zeit-Spannungs-Cluster definiert, der einerseits durch das Intervall der Wäschespannung zwischen dem ersten und dem zweiten Wert der Spannung und andererseits durch das Intervall zwischen dem ersten und dem zweiten Zeitpunkt begrenzt wird. Dadurch wird gewährleistet, dass die vorgegebene Endfeuchte bzw. Trocknungsgrad der Wäschestücke stets erreicht wird.

Bei dem Verfahren wird in bevorzugter Weise der Abschaltzeitpunkt auf den momentanen Zeitpunkt bestimmt, zu dem der momentane Wert der Spannung der Wäschestücke vor dem Erreichen des ersten Zeitpunkts auf den zweiten Spannungswert ansteigt. Mit anderen Worten wird der Pflegeprozess dann sofort zu diesem momentanen Zeitpunkt beendet. In vorteilhafter Weise kann dadurch die elektrische Energie gespart werden, weil beispielsweise bei kleinerer Beladung des Hausgeräts der Pflegeprozess sofort beim Erreichen der vorgegebenen Endfeuchte beendet wird, ohne den vorbestimmten ersten bzw. zweiten Zeitpunkt erreichen zu müssen.

Bevorzugt wird bei dem Verfahren der Abschaltzeitpunkt auf den Zeitpunkt bestimmt, zu dem der Wert der Spannung auf einen Schwellwert, insbesondere einen Wert gleich oder größer dem zweiten Spannungswert, steigt, wenn der Wert der Spannung nach dem Erreichen des zweiten Zeitpunkts unter dem ersten Spannungswert liegt. Dadurch wird erreicht, dass die vorgegebene Endfeuchte der Wäschestücke jedes Mal erreicht wird, selbst wenn die vordefinierte Prozessdauer überschritten wird.

Bei dem Verfahren wird bevorzugt der erste Spannungswert durch eine Multiplikation des zweiten Spannungswerts mit einem Faktor kleiner als 1 vorgegeben, wobei der Faktor bevorzugt in einer Entwicklungsphase des Hausgeräts abhängig vom Trocknungsprogramm definiert wird. Dadurch kann der Faktor, und somit der erste und der zweite Spannungswert, besonders exakt, insbesondere auf der Grundlage von Parametern, wie Beladung, Umgebungstemperatur, Anfangsfeuchte der Wäschestücke und dergleichen, ermittelt werden.

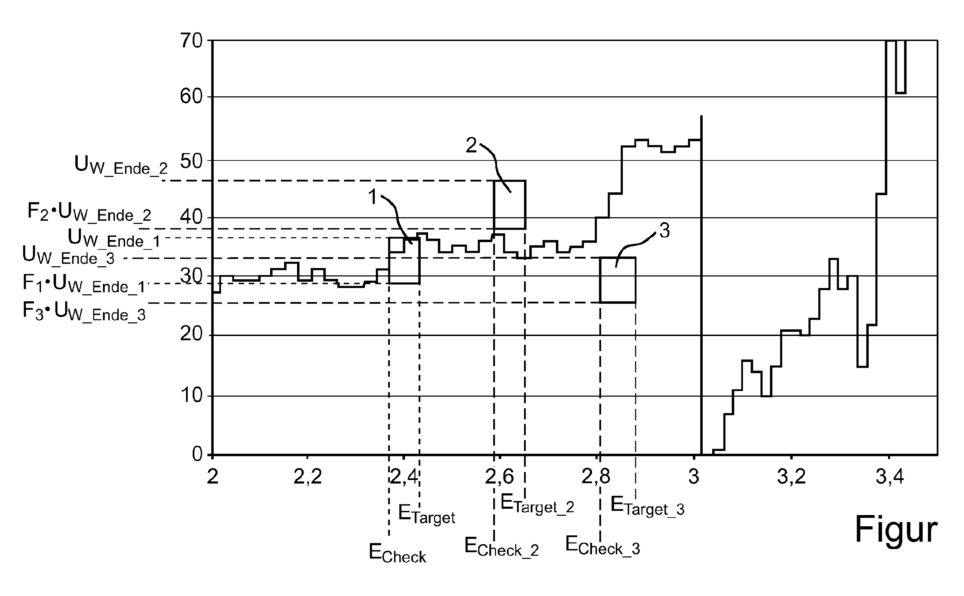

Weitere Vorteile, Merkmale und Einzelheiten der Erfindung ergeben sich aus der nachfolgenden Beschreibung eines bevorzugten Ausführungsbeispiels sowie anhand der Zeichnung.

Die einzige Figur zeigt einen beispielhaften Verlauf einer an in ein Hausgerät eingebrachten Wäschestücken abfallenden Wäschespannung über eine für eine vordefinierte Menge an Wäschestücken einschließlich deren Anfangsfeuchte benötigte Gesamtheizenergie.

Das Hausgerät zur Pflege von Wäschestücken kann ein Trockner oder ein Waschtrockner sein, welcher eine Steuereinheit aufweist, die zur Ausführung des nachfolgend zu beschriebenen Verfahrens eingerichtet, insbesondere programmiert, ist und welche mit entsprechenden Sensoren zur Messung der notwendigen Daten zur Durchführung des Verfahrens verbunden ist.

Gemäß einem Ausführungsbeispiel eines Verfahrens zum Bestimmen eines Abschaltzeitpunkts eines Pflegeprozesses, durch welchen in ein Hausgerät eingebrachte Wäschestücke gepflegt werden, werden ein erster und ein zweiter Wert einer an den Wäschestücken abfallenden Wäschespannung definiert. Dabei ergibt sich der erste Wert der Wäschespannung F · U_{W_Ende} durch eine Multiplikation des zweiten Werts der Wäschespannung U_{W}__{Ende} mit einem Faktor F kleiner 1. Die beiden Werte der Wäschespannung sind auf dem in der Figur dargestellten Diagramm gezeigt. Des Weiteren liegt gemäß dem Ausführungsbeispiel eine Information über den Verlauf einer Heizleistung vor, und zwar abhängig von dem ausgewählten Trocknungsprogramm. Durch ein Aufintegrieren des Verlaufs der Heizleistung ergibt sich eine Summe der Gesamtheizenergie E_{Target}, die für das vorgewählte Trocknungsprogramm und für eine vordefinierte Menge an Wäschestücken einschließlich einer Anfangsfeuchte für den Pflegeprozess benötigt wird. Des Weiteren ist eine minimale Gesamtheizenergie E_{Check} vorgegeben, die innerhalb einer Entwicklungsphase des Hausgeräts bereits für jedes Trocknungsprogramm, jede Beladung, Umgebungstemperatur und Anfangsfeuchte bereits ermittelt wurde. Die zwei Werte der Gesamtheizenergie E_{Check} und E_{Target} sind auf dem Diagramm eingezeichnet.

Durch Festlegen der beiden Werte der Wäschespannung U_{W_Ende} und F · U_{W_Ende} sowie der beiden Werte der Gesamtheizenergie E_{Check} und E_{Target} wird ein Energie-Spannung-Cluster 1 gebildet. Eine beispielhafte Stellung des Energie-Spannungs-Clusters 1 ist in Figur dargestellt, wobei die Position des Energie-Spannungs-Clusters 1 abhängig vom ausgewählten Trocknungsprogramm und den oben genannten Parametern ist.

Gemäß dem Ausführungsbeispiel wird der Pflegeprozess nach Erreichen einer vorgegebenen Endfeuchte der Wäschestücke beendet. Wie aus Figur zu erkennen ist, verläuft die Wäschespannung innerhalb des Energie-Spannungs-Clusters 1. In dem Fall wird der Pflegeprozess zu dem Zeitpunkt beendet, zu welchem die Gesamtheizenergie E_{Target} erreicht wird.

Ist ein anderes Trocknungsprogramm ausgewählt bzw. eine andere Menge von Wäschestücken erkannt, so wird beispielsweise ein anderer Energie-Spannungs-Cluster 2, wie dies aus dem Diagramm zu erkennen ist, definiert. Dem Energie-Spannungs-Cluster-2 liegen folgende Werte der Wäschespannung bzw. der Gesamtheizenergie zugrunde: U_{W_Ende_2}, F₂ · U_{W_Ende_2} sowie E_{Check_2} und E_{Target_2}. Aus der Figur ist erkennbar, dass die Wäschespannung nunmehr außerhalb des Energie-Spannungs-Clusters verläuft. Gemäß dem Ausführungsbeispiel wird somit der Pflegeprozess dann beendet, wenn die Wäschespannung den maximalen Wert U_{W_Ende_2} erreicht hat.

Ein weiterer Energie-Spannungs-Cluster 3 ist für ein weiteres Trocknungsprogramm durch die Gesamtheizenergien E_{Check_3} und E_{Target_3} sowie durch die Wäschespannungen U_{W_Ende_3} und F_{3 ·} U_{W_Ende_3} definiert. Aus dem Diagramm ist zu erkennen, dass die Wäschespannung bereits vor dem Erreichen der Gesamtheizenergie E_{Check_3} die maximale Wäschespannung U_{W_Ende_3} erreicht hat. In diesem Fall wird der Pflegeprozess vorzeitig beendet und zwar direkt nach dem Erreichen der maximalen Wäschespannung U_{W_Ende_3}. Dadurch wird vermieden, dass der Pflegeprozess unnötig fortgesetzt wird im Falle, dass die vorgegebene Endfeuchte der Wäschestücke bereits erreicht wurde.

Anstelle der im Diagramm eingebrachten Gesamtheizenergie kann auch eine Prozessdauer, die ebenfalls vorliegt, herangezogen werden. Es kann somit anstelle der ersten Gesamtheizenergie E_{Check} eine erste Prozessdauer t_{Check} sowie anstelle der zweiten Gesamtheizenergie E_{Target} eine zweite Prozessdauer t_{Target} definiert werden. Beide Größen, die Gesamtheizenergie und die Prozessdauer, können als gleichberechtigt betrachtet werden. Bei Nennung nur einer der beiden Größen ist die Aussage auch auf die zweite Größe übertragbar.

## Patentansprüche

1. Verfahren zum Bestimmen eines Abschaltzeitpunkts eines Pflegeprozesses, durch welchen in ein Hausgerät eingebrachte Wäschestücke gepflegt werden, bei welchem ein Verlauf einer Gesamtheizenergie (E) für die Pflege der Wäschestücke definiert und eine über einem elektrischen Widerstand der Wäschestücke durch einen elektrischen Strom vorgegebener Stärke abfallende elektrische Spannung (U_{w}) während des Pflegeprozesses ermittelt werden, und abhängig von dem Verlauf der Gesamtheizenergie (E) während des Pflegeprozesses, einer Summe der vordefinierten Gesamtheizenergie (E_{Target}) und dem aktuellen Wert der elektrischen Spannung (U_{w}) der Wäschestücke der Abschaltzeitpunkt bestimmt wird.

2. Verfahren nach Anspruch 1, bei welchem die für den gesamten Pflegeprozess erforderliche Gesamtheizenergie (E_{Target}) durch ein Aufintegrieren einer Heizleistung bestimmt wird.

3. Verfahren nach Anspruch 1 oder 2, bei welchem ein Intervall der Gesamtheizenergie (E) zwischen einem ersten (E_{Check}) und einem höheren zweiten (E_{Targe}t) Gesamtheizenergiewert und ein Intervall der Spannung (U_{w}) der Wäschestücke zwischen einem ersten (F _{·} U_{W_Ende}) und einem höheren zweiten (U_{W_Ende}) Spannungswert vorgegeben werden, wobei dann beim Erreichen des zweiten Gesamtheizenergiewerts (E_{Target}) der Abschaltzeitpunkt bestimmt wird, wenn ein momentaner Wert der Spannung (U_{w}) während des Pflegeprozesses innerhalb des Intervalls der Spannung (F · U_{W_Ende}, U_{W_Ende}) und ein momentaner Wert der Gesamtheizenergie (E) innerhalb des Intervalls der Gesamtheizenergie (E) liegt.

4. Verfahren nach einem der vorhergehenden Ansprüche, bei welchem ein Intervall der Gesamtheizenergie (E) zwischen einem ersten (E_{Check}) und einem höheren zweiten (E_{Target}) Gesamtheizenergiewert und ein Intervall der Spannung (U_{w}) der Wäschestücke zwischen einem ersten (F · U_{W_Ende}) und einem höheren zweiten (U_{W_Ende}) Spannungswert vorgegeben werden, wobei der Abschaltzeitpunkt auf den aktuellen Zeitpunkt bestimmt wird, zu dem der Spannungswert (U_{w}) vor dem Erreichen des ersten Gesamtheizenergiewerts (E_{Check}) über den zweiten Spannungswert (U_{W_Ende}) ansteigt.

5. Verfahren nach einem der vorhergehenden Ansprüche, bei welchem ein Intervall der Gesamtheizenergie (E) zwischen einem ersten (E_{Check}) und einem höheren zweiten (E_{Target}) Gesamtheizenergiewert und ein Intervall der Spannung (U_{w}) der Wäschestücke zwischen einem ersten (F · U_{W_Ende}) und einem höheren zweiten (U_{W_Ende}) Spannungswert vorgegeben werden, wobei der Abschaltzeitpunkt auf den Zeitpunkt bestimmt wird, zu dem der Spannungswert auf einen Schwellwert, insbesondere einen Wert gleich oder größer dem zweiten Spannungswert (U_{W_Ende}), steigt, wenn der Wert der Spannung (U_{w}) nach dem Erreichen des zweiten Gesamtheizenergiewerts (E_{Target}) unter dem ersten Spannungswert (F · U_{W_Ende}) liegt.

6. Verfahren nach einem der Ansprüche 3 bis 5, bei welchem der erste Spannungswert (F · U_{W_Ende}) durch eine Multiplikation des zweiten Spannungswerts (U_{W_Ende}) mit einem Faktor (F) kleiner 1 vorgegeben wird.

7. Verfahren nach Anspruch 6, bei welchem der Faktor (F) in einer Entwicklungsphase des Hausgeräts abhängig vom Trocknungsprogramm definiert wird.

8. Verfahren zum Bestimmen eines Abschaltzeitpunkts eines Pflegeprozesses, durch welchen in ein Hausgerät eingebrachte Wäschestücke gepflegt werden, bei welchem eine Prozessdauer (t_{Target}) des gewählten Pflegeprozesses für die Pflege der Wäschestücke vordefiniert und eine an einem elektrischen Widerstand der Wäschestücke über einem elektrischen Widerstand der Wäschestücke durch einen elektrischen Strom vorgegebener Stärke abfallende elektrische Spannung (U_{w}) während des Pflegeprozesses ermittelt werden, und abhängig von der fortgeschrittenen Prozessdauer (t) während des Pflegeprozesses, der vordefinierten Prozessdauer (t_{Target}) des gewählten Pflegeprozesses und dem aktuellen Wert der elektrischen Spannung (U_{w}) der Wäschestücke der Abschaltzeitpunkt bestimmt wird.

9. Verfahren nach Anspruch 8, bei welchem ein Prozessdauerintervall zwischen einem ersten (t_{Check}) und einem höheren zweiten (t_{Target}) Zeitpunkt und ein Intervall der Spannung der Wäschestücke zwischen einem ersten (F · U_{W_Ende}) und einem höheren zweiten (U_{W_Ende}) Spannungswert vorgegeben werden, wobei dann beim Erreichen des zweiten Werts der Prozessdauer (t_{Target}) der Abschaltzeitpunkt bestimmt wird, wenn ein momentaner Wert der Spannung (U_{w}) während des Pflegeprozesses innerhalb des Intervalls der Spannung und ein momentaner Zeitpunkt der Prozessdauer innerhalb des Prozessdauerintervalls liegt.

10. Verfahren nach Anspruch 8 oder 9, bei welchem ein Prozessdauerintervall zwischen einem ersten (t_{Check}) und einem höheren zweiten (t_{Target}) Zeitpunkt und ein Intervall der Spannung der Wäschestücke zwischen einem ersten (F · U_{W_Ende}) und einem höheren zweiten (U_{W_Ende}) Spannungswert vorgegeben werden, wobei der Abschaltzeitpunkt auf den momentanen Zeitpunkt bestimmt wird, zu dem der momentane Spannungswert (U_{w}) vor dem Erreichen des ersten Zeitpunkts (t_{Check}) auf den zweiten Spannungswert (U_{W_Ende}) ansteigt.

11. Verfahren nach einem der Ansprüche 8 bis 10, bei welchem ein Prozessdauerintervall zwischen einem ersten (t_{Check}) und einem höheren zweiten (t_{Target}) Zeitpunkt und ein Intervall der Spannung der Wäschestücke zwischen einem ersten (F · U_{W_Ende}) und einem höheren zweiten (U_{W_Ende}) Spannungswert vorgegeben werden, wobei der Abschaltzeitpunkt auf den Zeitpunkt bestimmt wird, zu dem der Wert der Spannung auf einen Schwellwert, insbesondere einen Wert gleich oder größer dem zweiten Spannungswert (U_{W_Ende}), steigt, wenn der Wert der Spannung nach dem Erreichen des zweiten Zeitpunkts (t_{Target}) unter dem ersten Spannungswert (F · U_{W_Ende}) liegt.

12. Verfahren nach einem der Ansprüche 9 bis 11, bei welchem der erste Spannungswert (F · U_{W_Ende}) durch eine Multiplikation des zweiten Spannungswerts (U_{W_Ende}) mit einem Faktor (F) kleiner 1 vorgegeben wird.

13. Verfahren nach Anspruch 12, bei welchem der Faktor (F) in einer Entwicklungsphase des Hausgeräts abhängig vom Trocknungsprogramm definiert wird.

## Claims

1. Method for determining a switch-off moment of a care process for treating items of laundry introduced into a household appliance, wherein a course of a total heat energy (E) for the care of the items of laundry is defined and an electrical voltage (U_{w}) dropping against an electrical resistance of the items of laundry due to an electrical current of specified strength is determined during the care process, and the switch-off moment is determined as a function of the course of the total heat energy (E) during the care process, a total of the predefined total heat energy (E_{Target}) and the actual value of the electrical voltage (U_{w}) of the items of laundry.

2. Method according to claim 1, wherein the total heat energy (E_{Target}) required for the entire care process is determined by integrating a heating power.

3. Method according to claim 1 or 2, wherein an interval of the total heat energy (E_{Target}) between a first (E_{Check}) and a higher second (E_{Target}) total heat energy value and an interval of the voltage (U_{W}) of the items of laundry between a first (F · U_{W_End}) and a higher second (U_{W_End}) voltage value are specified, the switch-off moment being determined when the second total heat energy value (E_{Target}) is reached if an instantaneous value of the voltage (U_{w}) during the care process lies within the interval of the voltage (F · U_{W_End}, U_{W_End}) and an instantaneous value of the total heat energy (E) within the interval of the total heat energy (E).

4. Method according to any one of the preceding claims, wherein an interval of the total heat energy (E) between a first (E_{Check}) and a higher second (E_{Target}) total heat energy value and an interval of the voltage (U_{W}) of the items of laundry between a first (F · U_{W_End}) and a higher second (_{UW_End}) voltage value are specified, the switch-off moment being determined for the actual moment at which the voltage value (U_{W}) increases above the second voltage value (U_{W_End}) before reaching the first total heat energy value (E_{Check}).

5. Method according to any one of the preceding claims, wherein an interval of the total heat energy (E) between a first (E_{Check}) and a higher second (E_{Target}) total heat energy value and an interval of the voltage (U_{w}) of the items of laundry between a first (F · U_{W_End}) and a higher second (U_{W_End}) voltage value are specified, the switch-off moment being determined for the moment at which the voltage value increases to a threshold value, in particular a value equal to or greater than the second voltage value (U_{W_End}), if the value of the voltage (U_{W}) lies below the first voltage value (F · U_{W_End}) after reaching the second total heat energy value (E_{Target}).

6. Method according to any one of claims 3 to 5, wherein the first voltage value (F · U_{W_End}) is specified by multiplying the second voltage value (U_{W_End}) by a factor (F) less than 1.

7. Method according to claim 6, wherein the factor (F) is defined in a development phase of the household appliance as a function of the drying program.

8. Method for determining a switch-off moment of a care process for treating items of laundry introduced into a household appliance, wherein a process time (t_{Target}) of the selected care process for the care of the items of laundry is predefined and an electrical voltage (U_{w}) dropping against an electrical resistance of the items of laundry due to an electrical current of specified strength at an electrical resistance of the items of laundry is determined during the care process, and the switch-off moment is determined as a function of the advanced process time (t) during the care process, the predefined process time (t_{Target}) of the selected care process and the actual value of the electrical voltage (U_{w}) of the items of laundry.

9. Method according to claim 8, wherein a process time interval between a first (t_{Check}) and a higher second (t_{Target}) moment and an interval of the voltage of the items of laundry between a first (F · U_{W_End}) and a higher second (U_{W_End}) voltage value are specified, the switch-off moment then being determined when the second value of the process time (t_{Target}) is reached if an instantaneous value of the voltage (U_{W}) during the care process lies within the interval of the voltage and an instantaneous moment of the process time during the process time interval.

10. Method according to claim 8 or 9, wherein a process time interval between a first (t_{Check}) and a higher second (t_{Target}) moment and an interval of the voltage of the items of laundry between a first (F · U_{W_End}) and a higher second (U_{W_End}) voltage value are specified, the switch-off moment being determined for the instantaneous moment at which the instantaneous voltage value (U_{W}) increases to the second voltage value (U_{W_End}) before reaching the first moment (t_{Check}).

11. Method according to any one of claims 8 to 10, wherein a process time interval between a first (t_{Check}) and a higher second (t_{Target}) moment and an interval of the voltage of the items of laundry between a first (F · U_{W_End}) and a higher second (U_{W_End}) voltage value are specified, the switch-off moment being determined for the moment at which the value of the voltage increases to a threshold value, in particular a value equal to or greater than the second voltage value (U_{W_End}), if the value of the voltage lies below the first voltage value (F · U_{W_End}) after reaching the second moment (t_{Target}).

12. Method according to any one of claims 9 to 11, wherein the first voltage value (F · U_{W_End}) is specified by multiplying the second voltage value (U_{W_End}) by a factor (F) less than 1.

13. Method according to claim 12, wherein the factor (F) is defined in a development phase of the household appliance as a function of the drying program.

## Revendications

1. Procédé destiné à déterminer un moment de coupure d'un processus d'entretien au moyen duquel des pièces de linge mises dans un appareil ménager sont entretenues, dans lequel une allure d'une énergie totale de chauffage (E) est définie pour l'entretien des pièces de linge et dans lequel une tension électrique (U_{W}) baissant en raison d'un courant électrique d'intensité prédéterminée est détectée pendant le processus d'entretien par l'intermédiaire d'une résistance électrique des pièces de linge, et dans lequel le moment de coupure est déterminé en fonction de l'allure de l'énergie totale de chauffage (E) pendant le processus d'entretien, d'une somme de l'énergie totale de chauffage prédéfinie (E_{Target}) et de la valeur actuelle de la tension électrique (U_{w}) des pièces de linge.

2. Procédé selon la revendication 1, dans lequel l'énergie totale de chauffage (E_{Target}) nécessaire pour la totalité du processus d'entretien est déterminée par une intégration d'une puissance de chauffage.

3. Procédé selon la revendication 1 ou 2, dans lequel un intervalle de l'énergie totale de chauffage (E) entre une première (E_{Check}) valeur d'énergie totale de chauffage et une deuxième (E_{Target}) valeur d'énergie totale de chauffage plus élevée, et un intervalle de la tension (U_{W}) des pièces de linge entre une première (F · U_{W_Ende}) valeur de tension et une deuxième (U_{W_Ende}) valeur de tension plus élevée sont prédéfinis, le point de coupure, lors de l'obtention de la deuxième valeur d'énergie totale de chauffage (E_{Target}), étant alors déterminé lorsqu'une valeur momentanée de la tension (U_{w}) pendant le processus d'entretien est située dans l'intervalle de la tension (F ·U_{W_Ende}, U_{W_Ende}) et lorsqu'une valeur momentanée de l'énergie totale de chauffage (E) est située dans l'intervalle de l'énergie totale de chauffage (E).

4. Procédé selon l'une quelconque des revendications précédentes, dans lequel un intervalle de l'énergie totale de chauffage (E) entre une première (E_{Check}) valeur d'énergie totale de chauffage et une deuxième (E_{Target}) valeur d'énergie totale de chauffage (E_{Target}) plus élevée, et un intervalle de la tension (U_{w}) des pièces de linge entre une première (F ·U_{W_Ende}) valeur de tension et une deuxième (U_{W_Ende}) valeur de tension plus élevée sont prédéfinis, le point de coupure étant déterminé au moment actuel auquel la valeur de tension (U_{W}), avant l'obtention de la première valeur d'énergie totale de chauffage (E_{Check}), augmente au-delà de la deuxième valeur de tension (U_{W_Ende}).

5. Procédé selon l'une quelconque des revendications précédentes, dans lequel un intervalle de l'énergie totale de chauffage (E) entre une première (E_{Check}) valeur d'énergie totale de chauffage et une deuxième (E_{Target}) valeur d'énergie totale de chauffage plus élevée, et un intervalle de la tension (U_{w}) des pièces de linge entre une première (F ·U_{W_Ende}) valeur de tension et une deuxième (U_{W_Ende}) valeur de tension plus élevée sont définis, le point de coupure étant déterminé au moment auquel la valeur de tension augmente pour passer à une valeur seuil, notamment à une valeur égale ou supérieure à la deuxième valeur de tension (U_{W_Ende}), lorsque la valeur de la tension (U_{W}), après l'obtention de la deuxième valeur d'énergie totale de chauffage (E_{Target}), est située en dessous de la première valeur de tension (F · U_{W_Ende}).

6. Procédé selon l'une quelconque des revendications 3 à 5, dans lequel la première valeur de tension (F _{·} U_{W-Ende}) est prédéfinie au moyen d'une multiplication de la deuxième valeur de tension (U_{W_Ende}) par un facteur (F) inférieur à 1.

7. Procédé selon la revendication 6, dans lequel le facteur (F) est défini pendant une phase de développement de l'appareil ménager en fonction du programme de séchage.

8. Procédé destiné à déterminer un moment de coupure d'un processus d'entretien au moyen duquel des pièces de linge mises dans un appareil ménager sont entretenues, dans lequel une durée de processus (t_{Target}) du processus d'entretien sélectionné est prédéfinie pour l'entretien des pièces de linge et dans lequel une tension électrique (U_{w}) baissant en raison d'un courant électrique d'intensité prédéfinie est détectée par l'intermédiaire d'une résistance électrique des pièces de linge pendant le processus d'entretien, et dans lequel le moment de coupure est déterminé en fonction de la durée de processus (t) en progression pendant le processus d'entretien, de la durée du processus prédéfinie (t_{Target}) du processus d'entretien sélectionné et de la valeur actuelle de la tension électrique (U_{w}) des pièces de linge.

9. Procédé selon la revendication 8, dans lequel un intervalle de durée de processus entre un premier (t_{Check}) moment et un deuxième (t_{Target}) moment plus élevé, et un intervalle de la tension des pièces de linge entre une première (F ·U_{W_Ende}) valeur de tension et une deuxième (U_{W_Ende}) valeur de tension plus élevée sont prédéfinis, le point de coupure, lors de l'obtention de la deuxième valeur de la durée de processus (t_{Target}), étant alors déterminé lorsqu'une valeur momentanée de la tension (U_{W}) pendant le processus d'entretien est située dans l'intervalle de la tension et lorsqu'un moment instantané de la durée de processus est situé dans l'intervalle de durée de processus.

10. Procédé selon la revendication 8 ou 9, dans lequel un intervalle de durée de processus entre un premier (t_{Check}) moment et un deuxième (t_{Target}) moment plus élevé, et un intervalle de la tension des pièces de linge entre une première (F ·U_{W_Ende}) valeur de tension et une deuxième (U_{W_Ende}) valeur de tension plus élevée sont définis, le point de coupure étant déterminé au moment instantané auquel la valeur de tension momentanée (U_{W}), avant l'obtention du premier moment (t_{Check}), augmente pour passer à la deuxième valeur de tension (U_{W_Ende)}.

11. Procédé selon l'une quelconque des revendications 8 à 10, dans lequel un intervalle de durée de processus entre un premier (t_{Check}) moment et un deuxième (t_{Target}) moment plus élevé, et un intervalle de la tension des pièces de linge entre une première (F ·U_{W_Ende}) valeur de tension et une deuxième (U_{W_Ende}) valeur de tension plus élevée sont définis, le point de coupure étant déterminé au moment auquel la valeur de la tension augmente pour passer à une valeur seuil, notamment à une valeur égale ou supérieure à la deuxième valeur de tension (U_{W_Ende}) lorsque la valeur de la tension, après l'obtention du deuxième moment (t_{Target}), est située en dessous de la première valeur de tension (F ·U_{W_Ende}).

12. Procédé selon l'une quelconque des revendications 9 à 11, dans lequel la première valeur de tension (F ·U_{W_Ende}) est prédéfinie au moyen d'une multiplication de la deuxième valeur de tension (U_{W_Ende}) par un facteur (F) inférieur à 1.

13. Procédé selon la revendication 12, dans lequel le facteur (F) est défini par le programme de séchage pendant une phase de développement de l'appareil ménager.
